# EUROPEAN PATENT SPECIFICATION

(11) **EP 3 879 661 B1**
(45) Date of publication and mention of the grant of the patent: **07.12.2022**
(21) Application number: 20162192.7
(22) Date of filing: 10.03.2020
(51) Int. Cl.: H02J 3/36, H02J 3/00, H02J 3/02, H02J 1/00, H02J 4/00, H02J 9/06, H04M 19/00

(54) **SAFE AND RESILIENT ENERGY DISTRIBUTION SYSTEM FOR A HIGHLY EFFICIENT MICROGRID**
SICHERES UND BELASTBARES ENERGIEVERTEILUNGSSYSTEM FÜR EIN HOCHEFFIZIENTES MIKRONETZ
SYSTÈME DE DISTRIBUTION D'ÉNERGIE SÛR ET RÉSISTANT POUR UN MICRO-RÉSEAU TRÈS EFFICACE

(43) Date of publication of application: 15.09.2021
(73) Proprietor: CE+T Power Luxembourg SA, 9911 Troisvierges (LU)
(72) Inventor: RIXHON, Daniel, 4470 SAINT-GEORGES-SUR-MEUSE (BE); FAGNY, Stéphane, 6700 HEINSCH (BE); FINFE, François, 7100 LA LOUVIERE (BE); BIDAINE, Benoit, 4671 SAIVE (BE); BLEUS, Paul, 4020 WANDRE (BE)
(74) Representative: AWA Benelux

(56) References cited:
- EP-A1- 3 293 851
- CN-U- 208 986 604
- US-A1- 2011 279 939
- US-A1- 2013 015 703
- US-A1- 2016 036 220

## Description

### Field of the Invention

The present invention relates to a system and a method developed for implementing efficient, resilient and safe distribution of electrical energy in High Voltage Direct Current (HVDC) and therefore suitable to contribute to the deployment of the fifth generation wireless technology for digital cellular networks (in short "5G" technology). High voltage AC distribution can also be contemplated in the frame of the present invention.

However the invention is also targeting any power distribution system in telecom field in general, IT field or power energy distribution in a microgrid with renewable sources and multiple loads set at different locations.

In the frame of the present application, the property of resilience will qualify power grids or networks infrastructure and operations characteristics such as strength and ability to make a fast recovery, which helps the grid or network to minimize or altogether avoid disruptions during and after a fault event.

### Background and Prior Art

Modern telecom operators see a dramatic increase of their energy consumption and the introduction of 5G technology is still expected to strengthen this tendency.

At the time our societies develop greater concern for environment and energy saving, increased demand for grid connectivity oppositely boosts energy consumption. Concurrently, the power consumption also tends to be offset toward the edge of the network where active equipment is decentralized.

In this context, power grids face multiple problems that all impact their reliability, quality and resilience. Consequently, telecom infrastructures cannot be deployed without equipment specifically aimed to provide quality power and backup. Having power resources in remote locations poses multiple challenges for operation and maintenance. Remote locations are expected to face harsh environments, to be hard place to get and, in metropolitan areas, to be submitted to various restrictions for installation.

Telecom operators get premium reward when first offering new services. Revenue generation is impacted for a long time. Quick deployment at low CAPEX is a key to catch the early mover revenue. Therefore, scalable solutions, pay-as-you-grow and expandability can play a major role to optimize the capital investment. While operating in traditional ways, power gets stranded because it is common to overprovision power resources and equipment. The capacity of reclaiming stranded power enables an organization to better use the initial capital investment and postpone the construction of ramifications.

Nowadays telecom networks additionally intend to become software-centric. The transformation is already underway implementing virtual functions to run on commodity hardware. Moreover, future power backup systems must be smart enough to cope with the actual workload constantly changing and moving within the infrastructure. Making software-defined communication infrastructures brings flexibility and effectiveness in network operation. It makes perfect sense to apply a same logic to power equipment and bring agility to power generation and storage. By pooling the points of generation and the storage capacities under the control of a management software it becomes possible to optimize the power infrastructures in regard to their location, time of use and efficiency.

Microgrid demonstrations and deployments have shown their ability to provide higher reliability and higher power quality than utility power systems as well as improved energy utilization. Smart grids also enable a more efficient use of electricity, shaving losses incurred during delivery and encouraging more efficient energy behavior by customers.

Combining microgrid infrastructures with the latest developments in energy conversion should allow to face sustainability challenges of next generation telecom networks along with the power availability and the infrastructure flexibility that are required to run reliable and profitable business.

In particular wireless 5G technology for telecommunication services is the new standard to guarantee broadband (up to 10Gbps) and low latency (less than 5ms). It will require to increase frequencies (e.g. from 26 GHz to 300 GHz), using millimeter waves. They offer much higher flowrate than present lower frequency waves (e.g. 4G, etc.), but their range is shorter and their penetration rate is quite poor. A wall or a rain downpour is enough to slow them down. In order to obtain good network coverage, it will therefore be necessary to multiply antennas (small cells) to circumvent obstacles, the latter being located for example on the roof of buildings or on lighting poles. Moreover, the antennas will be directional, that is to say capable of focusing directly on a mobile phone in order to send, for example, a video, so as to be more efficient and less energy consuming. These antennas will also be able to manage a large number of connections at the same time, without saturation.

However deploying radio transmitters at the edge of telecom networks and distributing power at high DC voltage will also induce some safety challenges. Usual midpoint grounding and fault detection by leakage measurement provide solutions that impede proper operability of the deployed systems : too many interruptions of service, no way to rapidly locate the fault, high MTTR, etc.

The applicant of the present application designs, manufactures and markets a range of products for industrial operators with mission critical applications, who are not satisfied with existing AC backup systems performances and related maintenance costs.

In particular, the applicant already markets the so-called ECI^{™} module (for *Enhanced Conversion Innovation)* that is an energy router that offers an innovative AC backup solution that is unlike other UPS's (patent family of US 8,044,535 B2).

To better allocate power resources and dispatch the power from wherever it is available to wherever it is most needed, the applicant has developed this energy router providing facility managers and microgrid design engineers with a tool for directing the power under the control of dedicated software means as power generation and demand vary.

Additionally, the applicant already markets the so-called "Power Fusion" concept that proposes a similar infrastructure based upon microgrid topology to power up datacenters and reduce dramatically the stranded power (patent family of WO 2018/210917 A1).

Document US 2011/0279939 A1 discloses an electrical circuit comprising a power supply, a load, first and second trunks disposed there between and control means adapted to control the electrical status of the first and second trunks, in which the control means comprises monitoring means adapted to monitor the current and/or voltage of the first and second trunks and to detect current and/or voltage events which are indicative of faults occurring thereon, and isolation means adapted to isolate the first or second trunk when the monitoring means detects a current and/or voltage event which is indicative of a fault occurring thereon, in which the first and second trunks are electrically connected and arranged in parallel such that the power supplied to the load is distributed substantially equally between them, and in which the control means comprises compensation means adapted to prevent the isolation means from isolating one of said first or second trunks when a current and/or voltage event which is indicative of a fault occurs thereon which is caused by a fault occurring on the other of the first or second trunks.

### Aims of the Invention

The present invention aims at avoiding or reducing the drawbacks of prior art.

In particular, the invention aims at responding to the multiple and contradictory challenges that the industry will be facing in managing and distributing power with cable lengths of several hundred meters, including safety concerns, while setting up any DC power distribution system like a microgrid, and particularly in 5G deployments.

The invention also aims at responding to the above challenges with a solution that is partly based on the innovative technologies recently patented by the applicant (ECI - US 8,044,535, Power Fusion - WO 2018/210917, Remote Power Feeding - EP 1 480 434, etc.).

A goal of the invention is also to provide a microgrid for distributing power to a number of decentralized loads and/or subtrunks in which local power supplies are available and resilient.

### Summary of the Invention

The present invention relates to a microgrid with a high voltage direct current (HVDC) source for efficiently and safely distributing power to decentralized loads, comprising :
- at least a main HVDC power supply connectable in input to an AC grid and in output to a main DC distribution network and loads system, having energy reserve means, and comprising a main fault isolator or main FI ;
- the main DC distribution network and loads system comprising a maintrunk bus, and subtrunks buses and/or front end local loads cells connected in parallel to the maintrunk bus, and comprising, at each branching of a subtrunk and a load or of a subtrunk of rank n-1 and a subtrunk of rank n, a local switch-based fault isolator or local FI, n being an integer comprised in the range [1, N] ;
- a smart main controller comprising microcontrollers, capable to smartly operate in cascade neighbouring local FIs in case of fault occurrence in the microgrid, so as to segregate the fault and favour or increase the resilience of the microgrid, characterized in that said smart operation in cascade of the neighbouring local FIs comprises assignation of increasing switch opening times to local FIs in the main DC distribution network and loads system, said opening times at respective local FIs having a common time origin set as the fault occurrence time and increasing with increasing electrical or cable length distance of said local FIs departing from a faulty subtrunk bus location in the direction towards main FI location, so as to successively disconnect in the direction towards main FI location the faulty subtrunk bus or buses from the network until arriving at a first non-faulty subtrunk bus, while at least one possible faulty local load has already been isolated within the timing corresponding to the local FI opening time of the last disconnected faulty subtrunk bus.

According to specific embodiments, the microgrid additionally comprises in combination one or of the following characteristics :
- said smart main controller is also capable to identify the occurrence of a safety fault, of the type current leakage to earth, and a local power demand peak in local loads in at least one part of the distribution network and loads system and further to locally isolate said fault, as well as commanding the main central power supply to share at least part of its energy reserve with said local loads in at least one part of the distribution network and loads system, through the maintrunk bus and subtrunk buses, while keeping the voltage stable in the whole distribution network and loads system ;
- the maintrunk bus is composed of subtrunk buses in line and separated by local FIs ;
- the microgrid comprises local bidirectional DC/DC or DC/AC converters for converting HVDC voltage to a stable DC, voltage output suitable to power front end local loads ;
- the main HVDC power supply comprises a bidirectional AC/DC converter or a bidirectional UPS converter of the type AC/DC/DC provided with an energy storage or a fully bidirectional AC/AC/DC with energy storage such as ECI technology ;
- the power supply is grounded and provided with two terminals respectively delivering +V, respectively Vac (ϕ = 0°), -V, respectively Vac (ϕ = 180°), preferably +190V, - 190V for a 380Vdc supply ;
- the local converters deliver in output a DC or AC voltage required for local loads ;
- the main FI comprises a high resistance mid-point ground HRMG controller and a main switch having an opening time T1, preferably equal to or higher than 100ms, in series with the maintrunk and commanded by a main microcontroller;
- the HRMG controller has two large-value resistors R, having a common end connected to earth and the other end respectively connected to one of the two terminals of HVDC, respective HVAC, power supply, said common end being connected to a main earthing terminal;
- the resistor R value is selected with a large value so as to get a safety current meeting a safety requirement, such as standard IEC/TR 60479-5:2007, the value of resistor R being preferably in the range 10 to 1000k ;
- said local FI comprises a first FI switch located between the maintrunk and the subtrunk/local load, a second FI switch being located in series with the maintrunk, or located between a first subtrunk and a secondary subtrunk/local load, a second FI switch being located in series with the first subtrunk, and so forth ;
- the opening time T3 of all the first FI switches feeding local loads is less than 10ms, preferably 2ms, and the opening time T2 of all the second FI switches feeding subtrunks is such as T2>T3, T2 being preferably at least 10ms, each pair of first and second FI switches being commanded by a local microcontroller, so as to meet the condition T1 > (T2+nT1/N) > T3 , where n, integer, is a switch address varying between 0 and N-1, with N being the total number of local FIs comprising a first FI switch and a second FI switch ;
- the DC distribution network and loads system has a linear topology with linearly distributed loads and one or two sources, in the latter case one source being at each end of the maintrunk bus, or is making a loop with at least one source, or is designed according to a tree structure with a single source or according to a tree with several sub-loops ;
- in the tree structure, the local and/or subtrunk FI double switch are identified by the smart main controller through unique digital addresses with a related local load flag and/or subtrunk flag ;
- in the linear topology with one source at each end of the maintrunk bus, the local and/or subtrunk FI double switches are identified by the smart main controller, based on digital addressing carried out from the first source up to the second source, so that the FIs are able to isolate a faulty subtrunk from both sides in the linear topology without undue deenergizing of one or more local loads;
- in the loop topology with one source, the local and/or subtrunk FI double switches are identified by the smart main controller, based on digital addressing of all the FIs in the loop, so that the FIs are able to isolate a faulty subtrunk from both sides of arrival in the loop topology without undue deenergizing of one or more local loads;
- the unique digital addressing per FI double switch comprises two 2-states presetted flags, corresponding to Load or No-Load and SubTrunk or No-SubTrunk, allowing the double switch smart controller to isolate the faulty load or the last faulty subtrunk or only the faulty subtrunk in case of loop topology or double source setup ;
- the local bidirectional DC/DC or DC/AC converters for converting HVDC to respective DC or AC voltage output suitable to power front end local loads are also provided with local energy buffers such as capacitive buffers, so as to allow local energy storage suitable for absorbing power consumption peaks and so as to increase bus voltage variation ;
- all the smart controllers of converters are capable of redirecting power from the local energy buffers, upstream in the microgrid, so as to relieve the DC or AC power grid ;
- the microgrid utilizes a power cable containing 2N power stranded wires, allowing to subdivide the distribution network and loads system into two subnetworks A, B, made each of A1, ..., An, ..., AN and B1, ..., Bn, ..., BN subtrunks respectively, each single local load being connected to one or both subtrunks of the same rank 1, ..., n, ..., N, each dual subtrunk unit being provided with two corresponding subtrunk fault isolators STFI and commendable bridging means between both subtrunks, and each single local load being provided with a local load fault isolator LLFI, so that, in case of fault occurrence in the network, a faulty subtrunk An, Bn respectively (1 ≤ n ≤N ) can be isolated and bypassed thanks to the STFIs and replaced by the sound subtrunk Bn, An respectively, for powering remaining sections of the network ;
- in case of bypassing of a faulty subtrunk, a control is provided to assure that the sound subtrunk is carrying at most 70% of the maximum rated strand cable current and/or to dynamically assure reduced loading of lower priority loads.

In the invention, the concept of modular rack-mounted power packs, combined with decentralized converters and specifically sized for average loads, is allowing bidirectional conversion, peak shaving, and microgrid utilization.

Further, the present invention is not limited to microgrids associated with HVDC sources. The skilled person will understand that the invention could be easily extended, mutatis mutandis, to microgrids based on one or more high voltage alternating current (HVAC) sources, associated to AC/AC converters as the case may be, leading to the use of a main AC distribution network and loads system.

The combination of renewable power sources and multiple grid connections enable cost savings while increasing the resilience of the overall infrastructure. This concept is advantageously based on the "Power Fusion" technology that operates like a decentralized bidirectional double conversion UPS. The invention is featured with safety means and enhanced with fault detection devices used as isolators to optimize the operability of the infrastructure.

### Brief Description of the Drawings

FIG. 1 is a schematic circuit diagram of a DC distribution microgrid power supply according to a first embodiment of the invention.
FIG. 2 is a schematic circuit diagram of a DC distribution microgrid power supply according to a second embodiment of the invention, which is a variant of the embodiment of FIG. 1, including a centralized battery backup.
FIG. 3 is a schematic circuit diagram of an earth connection for a bipolar output voltage source called high resistance mid-point grounding (HRMG) used in the above-mentioned HVDC distribution microgrid power supply.
FIG. 4 schematically shows an example of microgrid solution based on DC distribution for efficiently and safely powering a 5G antenna network having critical AC loads too.
FIG. 5 is an example of switching table for the addressed double switches according to the present invention. Each relay is settable to switch a local load L (1) or a subtrunk ST (0).
FIG. 6 schematically represents a linear microgrid energy distribution with a single power supply, according to one embodiment of the invention.
FIG. 7 schematically represents a linear microgrid energy distribution with two power supplies, respectively located at a first end and a second end of the grid, according to another embodiment of the invention.
FIG. 8 schematically represents a microgrid in an energy distribution tree configuration, according to another embodiment of the invention.
FIG. 9 schematically represents a microgrid in loop configuration, according to still another embodiment of the invention.
FIG. 10 schematically represents a microgrid in linear loop with one power supply and closed thanks to a second power sub-cable, according to still another embodiment of the invention.
FIG. 11 schematically represents a microgrid in linear loop with one power supply and closed thanks to a second power sub-cable, with the two power sub-cables alternately powering the local loads, according to still another embodiment of the invention.
FIG. 12 schematically represents an embodiment of microgrid implementing FIs for a double power feeder group (A&B) both available in a stranded cable, with a minimum of 2 x 2 power wires, so that the FIs are able to isolate a faulty subtrunk without undue deenergizing of one or more local loads.

### Detailed Description of the Invention

The present invention is related to a new power distribution and backup technology targeting for example 4G and 5G telecom environments and/or equivalent infrastructures, and potentially combining a mix of patented ECI^{™} UPS technology, also known as TSI^{™}, and patented Power Fusion technology, also known as *"Virtualization of Power for Data Centers, Telecom Environments and equivalent Infrastructures",* as well as insulation means for safety and operational purpose.

It is a first objective of the present invention to provide a HVDC microgrid/bus to bidirectionally provide energy from a central energy reservoir (central backup) to a series of loads, each containing a small energy buffer, which allows to absorb energy consumption peaks and to increase the available power on the microgrid. The bidirectionality of the microgrid elements/hubs have a positive impact on the stability of the grid and the existence of energy backup downstream offers the possibility to redirect power upstream in order to relieve the DC or AC power grid.

Secondly, as the DC bus is intended to convey not only power but also data (e.g. by using a hybrid power cable/optical fiber such as disclosed in US 2016/0300643 A1), relying on a central safety element induces the risk to lose all the data in case of a fault downstream in the bus. According to the invention, a fault isolation strategy will be adopted, using the fault segregation principle (or distinct breaker levels).

The advantages of fault segregation permit to avoid general installation shutdown as well as local loads shutdown and to allow safe maintenance intervention for the operators with life loads. Other improvements of distributed power availability may be implemented thanks to adequate distribution topology.

Thirdly, in addition to main energy supply, the application of "Power fusion" principles provides energy buffer sharing between bidirectional DC input stages of converters (DC connected to DC bus in local), to avoid voltage drop on long wires, while leading to higher resilience of distributed power.

### Description of Preferred Embodiments of the Invention

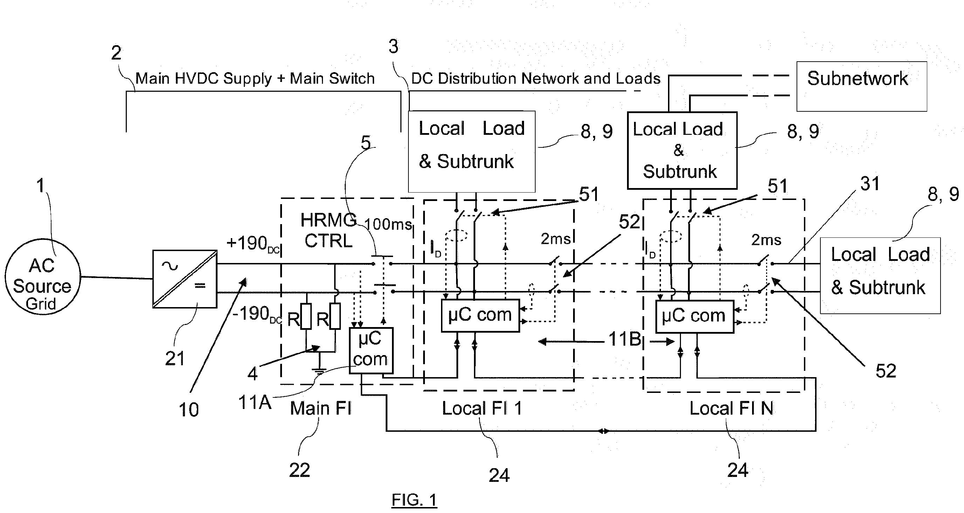

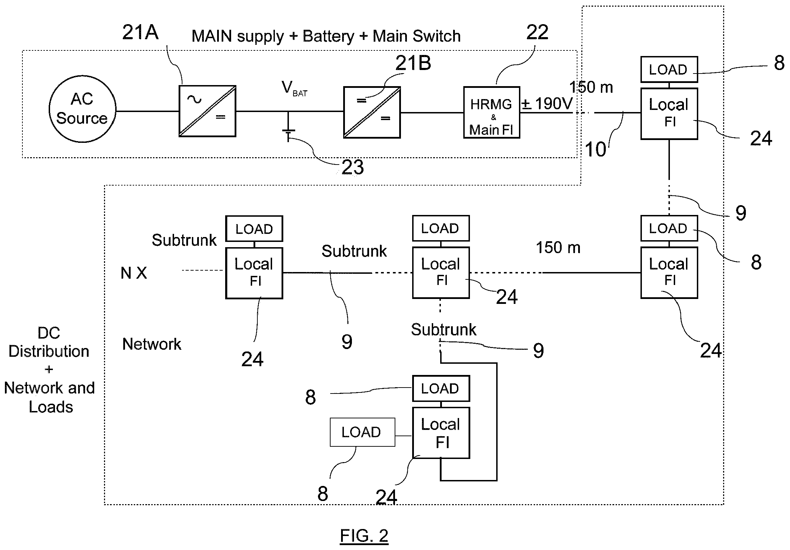

According to some embodiments of the invention shown on FIG. 1 to FIG. 3, an AC source 1 (grid) is connected to a first functional block 2, comprising the main supply 21, the main fault isolator or main FI 22 and optionally a battery 23. The first functional block 2 is connected to a second functional block 3 comprising the DC distribution lines (cable system) 31 and the (IT) loads 32.

The AC/DC converter 21 connects the AC grid 1 and the distributed 380Vdc (+/- 190 Vdc) DC voltage. The main supply is connected to the DC distribution network and loads 3 through a HRMG (high resistance mid-point ground) fault monitoring module 4 and a series 100ms opening time main breaker 5. In the fault monitoring module 4, each DC line is connected to the common ground 6 through two large-value resistors (R) 7 having the same value, making the fault monitoring module. The value of resistor R is in the range 10kΩ to 1000kΩ. The current threshold is in the range 4 to 25mA so as to stay in the zone DCII of standard IEC/TR 60479-5. The HRMG fault monitoring module 4 together with the main breaker 5 and microcontroller 11A (µCcom) form the main FI 22.

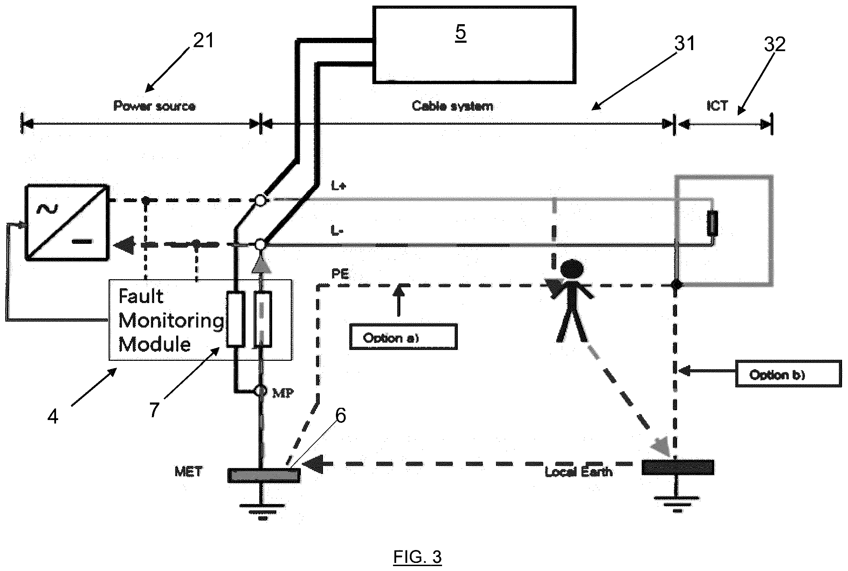

In case one of the DC polarities is faulty connected to ground (see FIG. 3), the current flowing in the circuit is forced through the high-ohmic resistors and thus limited to mA values, which is a safety feature suitable for the persons. This feature being built within the controlled fault detection module further allows a quick identification of the fault and owing to safe current levels involved, the system is allowed to continue its operation in a time range before cancelling of the ground fault.

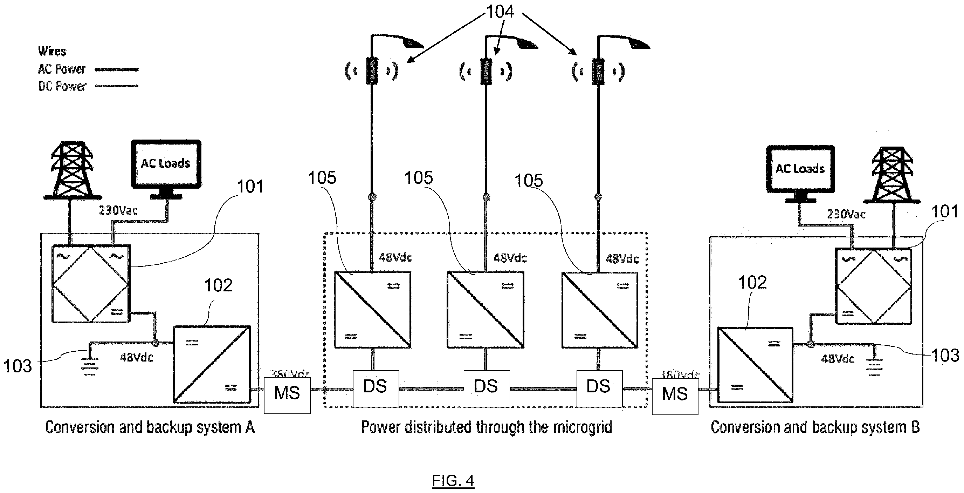

In one embodiment, local loads 8 possibly fed with a DC/DC or a DC/AC converter in series (see FIG. 4, 380V to 48V DC/DC converter) are connected in parallel on the DC distribution lines through a 2ms opening time current-controlled bipolar relay/switch 51, which is actually a first fault isolator (FI) switch that switches off when leakage current is higher than a predetermined threshold. Cable systems 31 between local loads 8 with their fault isolator 51 and/or subtrunks 9 are provided with a 10ms to 100ms opening time second FI switch, which is a current-controlled bipolar relay/switch 52 . All the first and second fault isolators 51, 52 are controlled by individual microcontrollers 11B (µCcom), preferably interconnected to address selective segregation of subtrunk fault isolators. Note that, in the following, the terms "subtrunk" and "subtrunk bus" will be used indifferently.

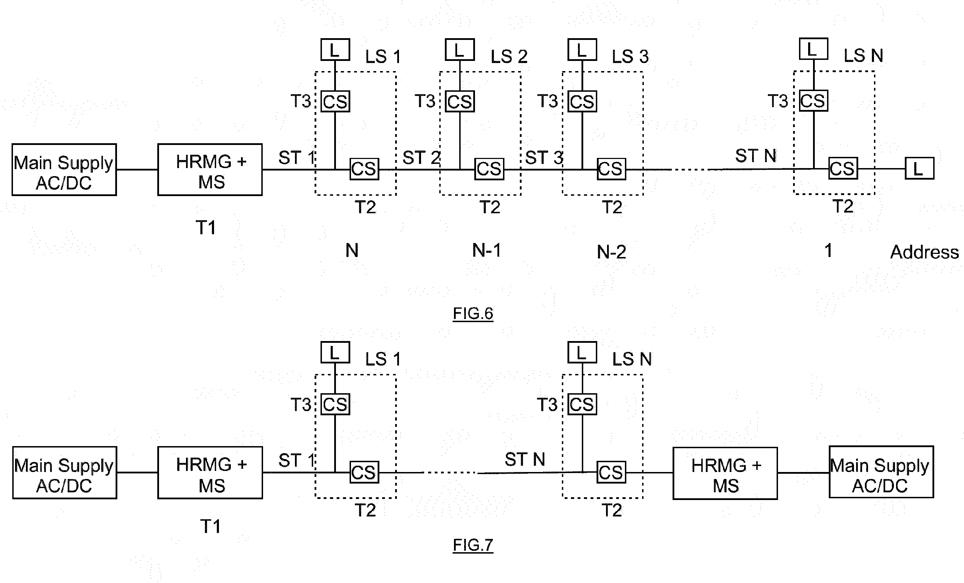

The switch system comprising a length of DC distribution cable with a series bipolar relay/switch 52 and a parallel local load 8 and/or subtrunk 9 with a parallel bipolar relay/switch 51 is called "local fault isolator FI" (Local FI 1, ... , local FI N). Note that, in figures 6 and following, for sake of simplicity, the local FI are also called "local switches" (LS) and the first and second FI switches 51, 52 are also called generically "controlled switches" (CS).

In an embodiment, the rules of safety are the following :
1. Select R to have Isafe = V+ / R, preferably to be in zone DC-II of standard IEC/TR 60479-5:2007 (*Effects of current on human beings and livestock* - *Part 5: Touch voltage threshold values for physiological effects*).
2. Set up a cable structure, as a linear, looped, tree structure or a combination thereof, with unique address for each local switch with its local load.
3. Set up a current trigger threshold according to above-mentioned standard (380V -> +/- 190V with HRMG).
4. Set increasing opening time for fault isolators from local load (with shorter opening time, i.e. less than 2ms) to the main switches (with longer opening time, i.e. equal or greater than 100ms). All fault isolators with their subtrunk, from end of trunk (at last subtrunk) to beginning of trunk at main supply, have an increasing opening time (i.e. 10ms for first end-of-line fault isolator, 20ms for the second one, ..., equal to or greater than 100 ms for the main fault isolator connected to first subtrunk ; note that in case of tree or looped cable structure, several subtrunks can be connected after the main fault isolator.
5. Local loads can be fed by bidirectional converters that contain an energy buffer which permits to advantageously implement the "power fusion" approach (see "power fusion" patent application WO 2018/210917 A1).
6. Energy sources are dynamically and hierarchically distributed.

In case a battery 23 is present, DC/DC converter 21B serves to stabilize the 380Vdc distributed secondary voltage and to limit DC current in subtrunks. Nominal Vbatt primary voltage can be 48Vnom or 288Vnom or 336Vnom, etc. according to physical constraints in the main power supply system that are the main supply, the battery and the isolating switch.

If the nominal battery voltage is 336V (for 380V float voltage), the 380V-stabilizing DC/DC converter could be possibly avoided but in discharge mode, voltage goes down, and current increases as well as inline drops, leading to less available power before shutdown at end of line.

Loads can be, either directly connected to +/-190V if this is compliant with the HRMG control, or connected through a DC/DC or DC/AC converter after the local switch. For example, the above converter can be DC/DC +/-190Vdc/48Vdc if the load is a telecom antenna or can be an inverter DC/AC +/-190Vdc/230Vac@50Hz or +/-190Vdc/120Vac@60Hz if the load is a common grid AC power supply.

According to one embodiment of the invention, in a linear distribution grid with only one centralized +/-190Vdc main source, the local switches have two outputs, and a unique address (Load and subtrunk), and behave as follows :
- each local load is disconnected if the leakage current to earth, after the upstream double switch fault isolator 51, 52, is higher than a threshold value comprised between 2 and 25mA (to be set at system installation) in less than T3, with T3 less than 10ms, typically between 1 and 2ms;
- the opening time T2 of the last subtrunk with highest address, penultimate, antepenultimate, etc. are respectively T2 = 10 ms, 10+x ms, 10+2x ms, 10+Nx ms, etc. (x integer, N = total number of double switches DS), with the highest value of T2 always staying below T1, with T1 being higher or equal than 100 ms, in such a way that all the upstream "good" subtrunks remain supplied while the "first" subtrunk having a leak to earth is isolated thanks to its related subtrunk switch ;
- the main fault isolator switch has an opening time greater or equal than T1 = 100ms for a leakage current defined in a safety standard (i.e. for IEC 60479, the current is comprised between 4 and 25mA).

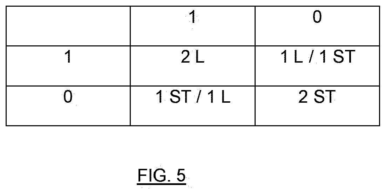

The powering network according to the invention can be :
- linear with one or two DC sources, in the latter case one at each end of the network, as a redundant equipment, and with gradual (increasing) addressing of the local switches as from the (or one) source. Note that the linear cabling topology with 2 power supplies, one at each end, has to implement that increasing switching time twice : once increasingly proportional to address sequence value, i.e. from first source to last subtrunk, and once decreasingly proportional to address sequence value, i.e. from second source to first subtrunk. This double supply approach is able to isolate the faulty subtrunk without losing local load (See example in FIG. 4) ;
- in a loop with one DC source : the addressing of double switches in a loop is handled like the configuration of double power sources based on a linear structure ;
- in a tree structure with a single DC source : the tree cabling topology shall be processed with a linear addressing approach to give a unique address per double switch DS, each switch having a 2 states-flag : Load or No-Load and SubTrunk or No-SubTrunk. These two flags lead to 3 combinations for the 2 switches on board: L&L (2 Loads) or L&ST (1 Load & 1 SubTrunk), ST&ST (2 SubTrunks). Each branch of the tree will always end with a subtrunk terminated by a load. With one double flag per switch, the double switch controller can isolate the faulty load or the last faulty subtrunk (See switching table in FIG. 5). For example the switching table can be implemented using DIP switches, which are preset at the installation of the microgrid.

This strategy of possibly isolating a single subtrunk at once leads to higher resilience on DC distribution not only at high level of human safety but also to the possibility of safe live maintenance, without stopping the loads (i.e. radio antennas in 5G network).

5G technology in particular requires powering of hundreds of small antennas in cities, malls, car parks, buildings, etc. Different powering solutions are available : directly from the grid, using an existing infrastructure or providing innovative "microgrid" technology (see above).

FIG. 4 shows an example of microgrid solution based on DC distribution, for efficiently powering a 5G antenna network while allowing to secure antennas. A system with two power sources is represented. Each backup and conversion system A and B comprises a first converter AC/DC/AC 101 which can be connected in input to the AC grid and in output to 230Vac loads and to a DC/DC converter 102 which output provides 380Vdc for distributing DC power through a microgrid according to the invention. A battery 103 (e.g. 48Vdc) can also be connected to the conversion system as described above. In the case illustrated on FIG. 4, 5G antennas 104 located on street lamp posts are powered by SELV voltage, e.g. 48Vdc, necessitating for each one a DC/DC converter 105 (380Vdc/48Vdc). In FIG. 4, according to another embodiment, the AC loads can each be replaced by a second AC source, such a diesel genset, in order to improve the supply availability (not shown).

### EXAMPLES OF WIRING TOPOLOGIES

### Linear microgrid (µGrid) with one power supply

As shown on FIG. 6, the structure is the following : Main Supply AC/DC + HRMG/Main Switch (MS) + SubTrunk 1 (ST1) with 2 Controlled Switches (CS) making a Local Switch 1 (LS1) and one Local Load (L) + ... + STN with 2 CS (LSN) and 2 L. The local switches LS1, LS2, LS3, ..., LSN have respective addresses N, N-1, N-2, ..., 1.

The µGrid partially resists to a total line disconnection, the upstream part from the point of disconnection being still powered. Resilience is weak. The addressing of the LS is linear and allows to eliminate the faulty ST as well as those which are located downstream. The (increasing) timing structure of the breakers is such that the ST are disconnected one by one from the faulty spot (or subtrunk) upstream to the power supply, by process of elimination. The cost of the system is low.

### Linear µGrid with two power supplies located at both ends ot the grid

As shown on FIG. 7, the structure is the following : Main Supply AC/DC #1 + HRMG/MS #1 + SubTrunk 1(ST1) with 2 Controlled Switches (CS) making LS1 and one Local Load (L) + ... + STN with 2 CS making LSN and 1L + HRMG/MS #2 + Main Supply AC/DC #2.

The µGrid resists to a total line disconnection, the upstream and downstream parts from the point of disconnection being still powered. Resilience is strong, as the system continues to be operated while losing only one ST thanks to the two independent power supplies and HRMG/MS.

The cost thereof is high owing a second AC source needed in another location, except if this second AC source is already the source of another neighbouring DC µGrid (likely case in a city).

### µGrid in tree with one power supply

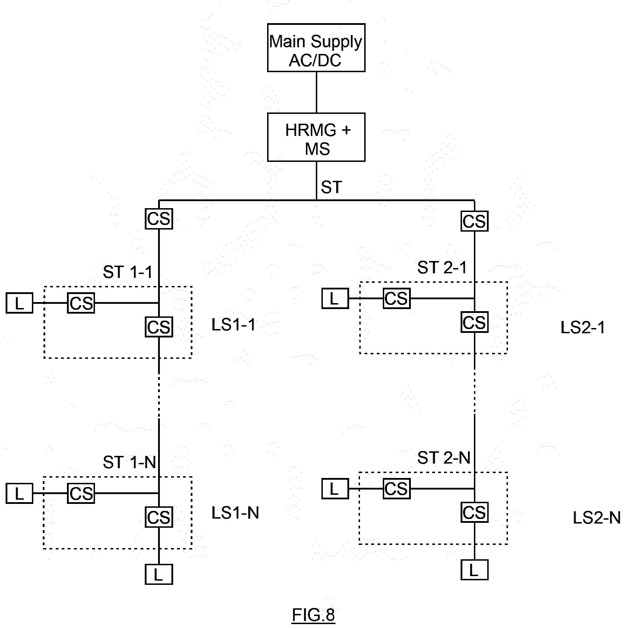

As shown on FIG. 8, the structure is the following : Main Supply AC/DC + HRMG/MS + Subtrunk (ST) + 2 Controlled Switches (CS) + 2 branches :
- ST1_1 with 2 Controlled Switches (CS) making a Local Switch 1 (LS1_1) and one Local Load (L) + ... + ST1_N with 2 CS (LS1_N) and 2 L ;
- ST2_1 with 2 Controlled Switches (CS) making a Local Switch 1 (LS2_1) and one Local Load (L) + ... + ST2_N with 2 CS (LS2_N) and 2 L.

The resilience is medium as the likelihood of line disconnection decreases with the proximity with the main supply while it increases with the proximity of the loads ("leaf' of tree). The cost thereof is low.

### µGrid in loop with one power supply

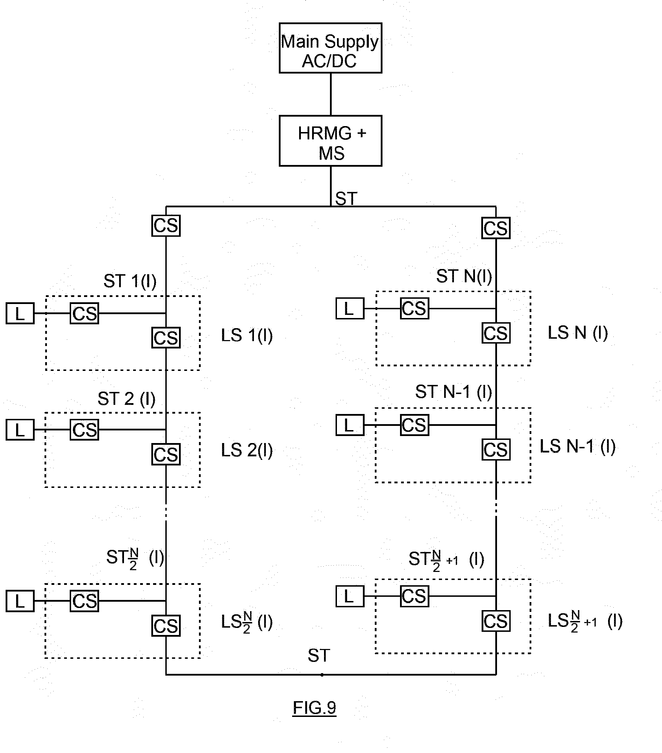

As shown on FIG. 9, the structure is the following (with N even) : Main Supply AC/DC + HRMG/MS + ST with 2 CS + ST1(I) with LS1(I) and one L + ST2(I) with LS2(I) and one L + ...+ ST(N/2)(I) with LS(N/2)(I) and one L + ST + ST(N/2+1)(I) with LS(N/2+1)(I) and one L + ... + STN(I) with LSN(I) and one L (return to power supply).

The µGrid resists to total line disconnection. Resilience is strong, as the system continues to operate while losing only one ST but an additional cable section between the last switch and the power supply is needed. The cost thereof is high owing to the need of additional (e.g. buried) cable.

### µGrid in "linear loop" closed by a second power sub-cable with only one power supply

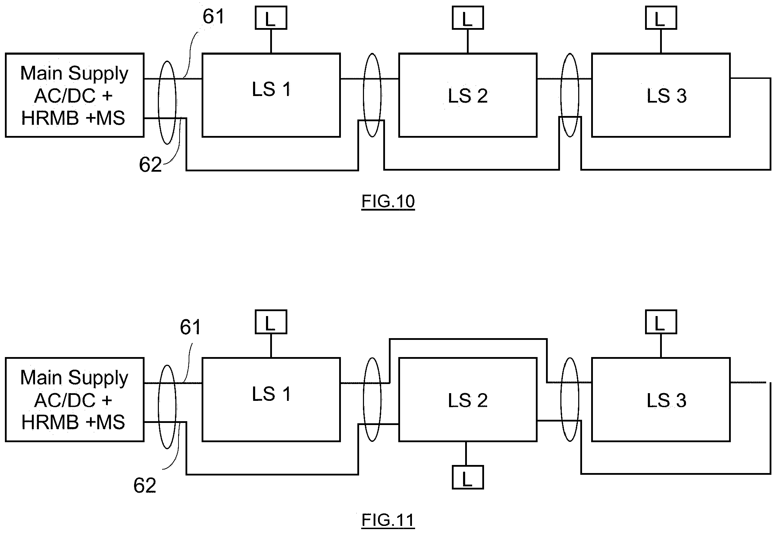

As shown on FIG. 10, the structure is similar to that of a loop with one power supply (see FIG. 9). However, in this case the different subtrunks and local switches are powered using cables having a first power sub-cable 61 and a second power sub-cable 62. In this configuration, the first power sub-cable 61 powers all the subtrunks ST1, ST2, ST3, etc. and all the local switches LS1, LS2, LS3, etc. (and all the local loads). The second power sub-cable 62 only closes the electrical circuit between the last subtrunk (LS3 on FIG. 10) and the power supply.

Resilience is high as the system continues to operate while losing one subtrunk. The cost thereof is low.

### µGrid in "linear loop" closed by a second power sub-cable and local loads powered alternately with the two power sub-cables, with only one power supply

The structure is shown on FIG. 11. The difference with FIG. 10 is that each power sub-cable alternately powers the subtrunks (or local switches or local loads).

Resilience is high and independent of faulty subtrunk localization and the system continues to operates while losing one subtrunk. The cost thereof is low.

### µGrid with dual subtrunk FIs (or dual power channel FIs) and single local load FI

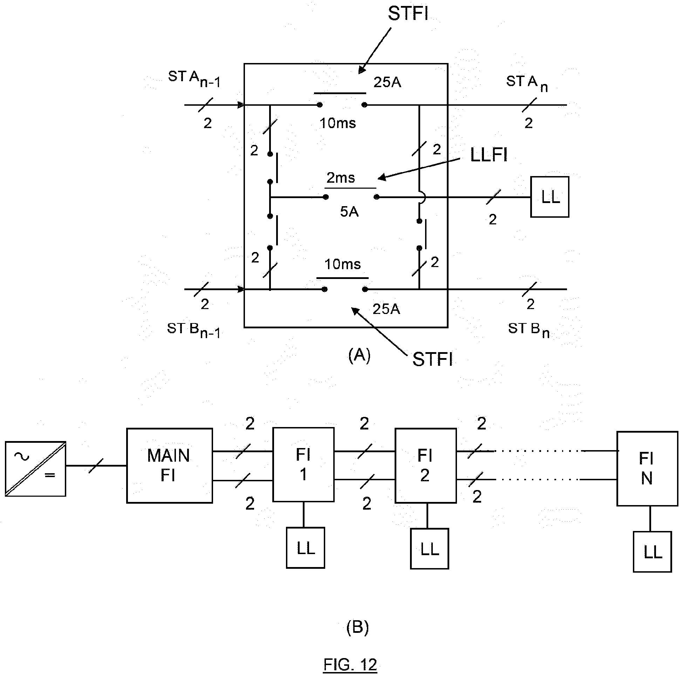

In the embodiment of FIG. 12, the microgrid is provided with dual subtrunks/power channels FIs and single local loads FIs. FIG. 12A shows an example of detailed topology for differentiated dual subtrunk and local loads FIs, while FIG. 12B more generally shows the principle thereof.

This configuration has the advantage, while using a cable containing 2N power stranded wires, to divide them into two and to subdivide the distribution into two A & B subnetworks of AN & BN subtrunks, the loads being connected on each Ax and/or Bx subtrunk.

A faulty subtrunk Ax, subtrunk Bx respectively, can be isolated by two dual channel FIs (STFIs) and replaced by subtrunk Bx, subtrunk Ax respectively. In this case subtrunk Bx, subtrunk Ax resp., is carrying the sum of the currents normally arriving to Ax and Bx. Losses in the cable being in RI², according to one embodiment, the load current in the A & B subnetworks will be advantageously limited for example to 70% of Imax in the whole cable and/or lower priority loads will be dynamically reduced/disconnected.

In the topology exemplified in FIG. 12A, subtrunk FIs (STFIs) are for example 25A/10ms FIs under the form of 600V MOS switches in parallel with a relay without breaking capacity and isolated contact ≈ 1kV and local loads FIs (LLFIs) are for example 2ms FIs under the form of 600V MOS switches with free-wheel diode and varistor VDR 400V DC.

### List of reference symbols

- 1: AC grid
- 2: Main HVDC power supply and main switch
- 3: DC distribution network and loads
- 4: HRMG fault monitoring module
- 5: Main breaker
- 6: Common ground (MET)
- 7: Resistor
- 8: Local load
- 9: Subtrunk bus
- 10: Maintrunk bus
- 11A: Main microcontroller
- 11B: Local microcontroller
- 21: Main power supply AC/DC converter
- 21A: Input AC/DC converter of main power supply
- 21B: Output DC/DC converter of main power supply
- 22: Main fault isolator or main FI
- 23: Battery of main power supply
- 24: Local fault isolator or local FI
- 31: Cable system
- 32: Loads
- 51: Local load or subtrunk parallel FI switch (first switch)
- 52: Local load or subtrunk series FI switch (second switch)
- 61: First sub-cable
- 62: Second sub-cable
- 101: AC/DC/AC converter of conversion and backup system
- 102: DC/DC converter of conversion and backup system
- 103: Battery of conversion and backup system
- 104: Antenna on street lamp post
- 105: Local DC/DC converter
- CS: Controlled switch
- DS: Double switch
- FI: Fault isolator
- HVDC: High voltage direct current
- HRMG: High resistance mid-point ground
- L (or LL): Local load
- LLFI: Local load fault isolator
- LS: Local switch
- MS: Main switch
- MET: Main earthing terminal
- ST: Subtrunk
- STFI: Subtrunk fault isolator
- T1, T2, T3: Opening time(s)

## Claims

1. A microgrid with a high voltage direct current HVDC source for efficiently and safely distributing power to decentralized loads, comprising :
- at least a main HVDC power supply (2) connectable in input to an AC grid (1) and in output to a main DC distribution network and loads system (3) in output, having energy reserve means, and comprising a main switch-based fault isolator or main FI (22) ;
- the main DC distribution network and loads system (3) comprising a maintrunk bus (10), and subtrunks buses (9) and/or front end local loads (8) cells connected in parallel to the maintrunk bus (10), and comprising, at each branching of a subtrunk bus and a load or of a subtrunk bus of rank **n-1** and a subtrunk bus of rank **n,** a local switch-based fault isolator or local FI (24), **n** being an integer comprised in the range [1, N] ;
- a smart main controller comprising microcontrollers (11A, 11B), capable to smartly operate in cascade neighbouring local FIs (24) in case of fault occurrence in the microgrid, so as to segregate the fault and favour or increase the resilience of the microgrid,
**characterized in that** said smart operation in cascade of the neighbouring local FIs (24) comprises assignation of increasing switch opening times to local FIs (24) in the main DC distribution network and loads system (3), said opening times at respective local FIs (24) having a common time origin set as the fault occurrence time and increasing with increasing electrical or cable length distance of said local FIs (24) departing from a faulty subtrunk bus location in the direction towards main FI location, so as to successively disconnect in the direction towards main FI location the faulty subtrunk bus or buses from the network until arriving at a first non-faulty subtrunk bus, while at least one possible faulty local load has already been isolated within the timing corresponding to the local FI (24) opening time of the last disconnected faulty subtrunk bus.

2. The microgrid according to Claim 1, wherein said smart main controller is also capable to identify the occurrence of a safety fault, of the type current leakage to earth, and a local power demand peak in local loads (8) in at least one part of the distribution network and loads system (3) and further to locally isolate said fault, as well as commanding the main central power supply (2) to share at least part of its energy reserve with said local loads (8) in at least one part of the distribution network and loads system (3), through the maintrunk bus (10) and subtrunk buses (9), while keeping the voltage stable in the whole distribution network and loads system (3).

3. The microgrid according to Claim 1, wherein the maintrunk bus (10) is composed of subtrunk buses (9) in line and separated by local FIs (24).

4. The microgrid according to Claim 1, wherein it comprises local bidirectional DC/DC or DC/AC converters (105) for converting HVDC voltage to a stable DC, voltage output suitable to power front end local loads (8, 104)

5. The microgrid according to Claim 1, wherein the main HVDC power supply (2) comprises a bidirectional AC/DC converter or a bidirectional UPS converter of the type AC/DC/DC (21A, 21B ; 101, 102) provided with an energy storage (23 ; 103) or a fully bidirectional AC/AC/DC with energy storage such as ECI technology.

6. The microgrid according to Claim 1, wherein the main FI (22) comprises a high resistance mid-point ground HRMG controller (4) and a main switch (5) having an opening time T1, preferably equal to or higher than 100ms, in series with the maintrunk (10) and commanded by a main microcontroller (11A).

7. The microgrid according to Claim 1, wherein said local FI (24) comprises a first FI switch (51) located between the maintrunk (10) and the subtrunk/local load (9, 8), a second FI switch (52) being located in series with the maintrunk (10), or located between a first subtrunk (9) and a secondary subtrunk /local load (9, 8), a second FI switch (52) being located in series with the first subtrunk (9), and so forth.

8. The microgrid according to Claim 7, wherein the opening time T3 of all the first FI switches (51) is less than 10ms, preferably 2ms, and the opening time T2 of all the second FI switches (52) is such as T2>T3, T2 being preferably at least 10ms, each pair of first and second FI switches (51, 52) being commanded by a local microcontroller (11B), so as to meet the condition T1 > (T2+nT1/N) > T3 , where n, integer, is a switch address varying between 0 and N-1, with N being the total number of local FIs (24) comprising a first FI switch (51) and a second FI switch (52).

9. The microgrid according to Claim 1, wherein the DC distribution network and loads system (3) has a linear topology with linearly distributed loads and one or two sources, in the latter case one source being at each end of the maintrunk bus (10), or is making a loop with at least one source, or is designed according to a tree structure with a single source or according to a tree with several sub-loops.

10. The microgrid according to Claim 9, wherein, in the tree structure, the local and/or subtrunk FI double switches (51, 52) are identified by the smart main controller through unique digital addresses with a related local load flag and/or subtrunk flag.

11. The microgrid according to Claim 9, wherein, in the linear topology with one source at each end of the maintrunk bus (10), the local and/or subtrunk FI double switches (51, 52) are identified by the smart main controller, based on digital addressing carried out from the first source up to the second source, so that the FIs are able to isolate a faulty subtrunk from both sides in the linear topology without undue deenergizing of one or more local loads.

12. The microgrid according to Claim 9, wherein, in the loop topology with one source, the local and/or subtrunk FI double switches (51, 52) are identified by the smart controller, based on digital addressing of all FIs in the loop, so that the FIs are able to isolate the faulty subtrunk from both sides of arrival in the loop topology without undue deenergizing of one or more local loads.

13. The microgrid according to Claim 10, wherein the unique digital addressing per FI double switch (51, 52) comprises two 2-states presetted flags, corresponding to Load or No-Load and SubTrunk or No-SubTrunk, allowing the double switch smart controller to isolate the faulty load or the last faulty subtrunk or only the faulty subtrunk in case of loop topology or double source setup.

14. The microgrid according to Claim 4, wherein the local bidirectional DC/DC or DC/AC converters (105) for converting HVDC to respective DC voltage output suitable to power front end local loads (8, 104) are also provided with local energy buffers such as capacitive buffers, so as to allow local energy storage suitable for absorbing power consumption peaks and so as to reduce bus voltage variation.

15. The microgrid according to Claim 1, wherein the microgrid utilizes a power cable containing 2N power stranded wires, allowing to subdivide the distribution network and loads system (3) into two subnetworks A, B, made each of A1, ..., An, ..., AN and B1, ..., Bn, ..., BN subtrunks respectively, each single local load being connected to one or both subtrunks of the same rank 1, ..., n, ..., N, each dual subtrunk unit being provided with two corresponding subtrunk fault isolators STFI and commandable bridging means between both subtrunks, and each single local load being provided with a local load fault isolator LLFI, so that, in case of fault occurrence in the network, a faulty subtrunk An, Bn respectively (1 ≤ n ≤N ) can be isolated and bypassed thanks to the STFIs and replaced by the sound subtrunk Bn, An respectively, for powering remaining sections of the network.

16. The microgrid according to Claim 15, wherein, in case of bypassing of a faulty subtrunk, a control is provided to assure that the sound subtrunk is carrying at most 70% of the maximum rated strand cable current and/or to dynamically assure reduced loading of lower priority loads.

## Patentansprüche

1. Mikrogitter mit einer Hochspannungsgleichstrom(HVDC)-Quelle für effizientes und sicheres Verteilen von Energie auf dezentralisierte Lasten, Folgendes umfassend:
- mindestens eine Haupt-HVDC-Energieversorgung (2), deren Eingang mit einem Wechselstrom(AC)-Gitter (1) und deren Ausgang mit einem Haupt-DC-Verteilungsnetz- und Lastensystem (3) verbindbar ist, das Energiereservemittel aufweist, und einen schalterbasierten Hauptfehlerisolator oder Haupt-FI (22) umfassend,
- wobei das Haupt-DC-Verteilernetz- und Lastensystem (3) eine Hauptleitungslinie (10) und Nebenleitungslinien (9) und/oder lokale Frontend-Lasten(8)-Zellen umfasst, die parallel zur Hauptleitungslinie (10) geschaltet sind, und an jedem Abzweig einer Nebenleitungslinie und einer Last oder einer Nebenleitungslinie des Rangs n-1 und einer Nebenleitungslinie des Rangs n einen lokalen schalterbasierten Fehlerisolator oder lokalen FI (24) umfasst, wobei n eine Ganzzahl ist, die in dem Bereich [1, N] enthalten ist,
- eine intelligente Hauptsteuerung, die Mikrocontroller (11A, 11B) umfasst, die in der Lage sind, intelligent in hintereinander geschalteten benachbarten lokalen FIs (24) zu operieren, wenn in dem Mikrogitter ein Fehler auftritt, so dass der Fehler separiert wird und die Resilienz des Mikrogitters begünstigt oder erhöht wird,
**dadurch gekennzeichnet, dass** das intelligente Operieren in hintereinander geschalteten benachbarten lokalen FIs (24) das Zuweisen zunehmender Schalteröffnungszeiten zu lokalen Fis (24) in dem Haupt-DC-Verteilernetz- und Lastensystem (3) umfasst, wobei bei den Öffnungszeiten an entsprechenden lokalen FIs (24) ein gemeinsamer Zeitursprung als Zeit des Auftretens des Fehlers eingestellt ist und sich die Öffnungszeiten mit zunehmender elektrischer oder Kabellängenentfernung der lokalen FIs (24), ausgehend von einer fehlerhaften Nebenleitungslinienposition in der Richtung hin zu der Position des Haupt-FI verlängern, so dass die fehlerhafte Nebenleitungslinie oder die fehlerhaften Nebenleitungslinien in der Richtung hin zu der Position des Haupt-FI nacheinander von dem Netz bis hin zu einer ersten nicht fehlerhaften Nebenleitungslinie getrennt werden, während mindestens eine mögliche fehlerhafte lokale Last innerhalb der Zeit, die der Öffnungszeit des lokalen FI (24) der letzten getrennten fehlerhaften Nebenleitungslinien entspricht, bereits isoliert wurde.

2. Mikrogitter nach Anspruch 1, wobei die intelligente Hauptsteuerung außerdem in der Lage ist, das Auftreten eines Sicherheitsfehlers der Art des Erdschlusses und einer lokalen Energiebedarfsspitze in lokalen Lasten (8) in mindestens einem Teil des Verteilungsnetz- und Lastensystems (3) zu identifizieren und ferner den Fehler lokal zu isolieren, wie auch die zentrale Hauptenergieversorgung (2) anzuweisen, mindestens einen Teil ihrer Energiereserve mit den lokalen Lasten (8) in mindestens einem Teil des Verteilungsnetz- und Lastensystems (3) durch die Hauptleitungslinie (10) und Nebenleitungslinien (9) zu teilen, während die Spannung in dem gesamten Verteilungsnetz- und Lastensystem (3) stabil gehalten wird.

3. Mikrogitter nach Anspruch 1, wobei die Hauptleitungslinie (10) aus Nebenleitungslinien (9) in Reihe besteht und durch lokale FIs (24) getrennt wird.

4. Mikrogitter nach Anspruch 1, wobei es lokale bidirektionale DC/DC- oder DC/AC-Wandler (105) zum Umwandeln von HVDC-Spannung in eine stabile DC-Spannungsausgabe umfasst, die geeignet ist, lokale Frontend-Lasten (8, 104) mit Energie zu versorgen.

5. Mikrogitter nach Anspruch 1, wobei die Haupt-HVDC-Energieversorgung (2) einen bidirektionalen AC/DC-Wandler oder einen bidirektionalen USV-Wandler der Art AC/DC/DC (21A, 21B, 101, 102) mit einem Energiespeicher (23, 103) oder einen vollständig bidirektionalen AC/AC/DC mit Energiespeicher wie beispielsweise ECI-Technologie umfasst.

6. Mikrogitter nach Anspruch 1, wobei der Haupt-FI (22) eine Steuerung mit High Resistance Midpoint Ground (HRMG) (4) und einen Hauptschalter (5) mit einer Öffnungszeit T1, die vorzugsweise gleich oder größer als 100 ms ist, in Reihe mit der Hauptleitung (10) und angewiesen durch einen Hauptmikrocontroller (11A) umfasst.

7. Mikrogitter nach Anspruch 1, wobei der lokale FI (24) einen ersten FI-Schalter (51) umfasst, der zwischen der Hauptleitung (10) und der Nebenleitung / lokalen Last (9, 8) angeordnet ist, einen zweiten FI-Schalter (52), der in Reihe mit der Hauptleitung (10) angeordnet ist oder zwischen einer ersten Nebenleitung (9) und einer zweiten Nebenleitung / lokalen Last (9, 8) angeordnet ist, einen zweiten FI-Schalter (52), der in Reihe mit der ersten Nebenleitung (9) angeordnet ist usw.

8. Mikrogitter nach Anspruch 7, wobei die Öffnungszeit T3 aller ersten FI-Schalter (51) kleiner als 10 ms ist, vorzugsweise 2 ms, und die Öffnungszeit T2 aller zweiten FI-Schalter (52) beispielsweise T2 > T3 ist, wobei T2 vorzugsweise 10 ms beträgt, wobei jedes Paar aus ersten und zweiten FI-Schaltern (51, 52) durch einen lokalen Mikrocontroller (11B) angewiesen wird, so dass die Bedingung T1 > (T2+nT1/N) > T3 erfüllt ist, wobei n, Ganzzahl, eine Schalteradresse ist, die zwischen 0 und N-1 variiert, wobei N die Gesamtanzahl lokaler FIs (24) ist, die einen ersten FI-Schalter (51) und einen zweiten FI-Schalter (52) umfassen.

9. Mikrogitter nach Anspruch 1, wobei das DC-Verteilungsnetz- und Lastensystem (3) eine lineare Topologie mit linear verteilten Lasten und einer oder zwei Quellen aufweist, wobei sich in letzterem Fall an jedem Ende der Hauptleitungslinie (10) eine Quelle befindet, oder eine Schleife mit mindestens einer Quelle bildet oder gemäß einer Baumstruktur mit einer einzelnen Quelle oder gemäß einem Baum mit mehreren Nebenschleifen gestaltet ist.

10. Mikrogitter nach Anspruch 9, wobei die lokalen und/oder Nebenleitungs-FI-Doppelschalter (51, 52) durch die intelligente Hauptsteuerung mittels eindeutiger digitaler Adressen mit einem zugehörigen Flag der lokalen Last und/oder einem Nebenleitungs-Flag identifiziert werden.

11. Mikrogitter nach Anspruch 9, wobei die lokalen und/oder Nebenleitungs-FI-Doppelschalter (51, 52) in der linearen Topologie mit einer Quelle an jedem Ende der Hauptleitungslinie (10) durch die intelligente Hauptsteuerung basierend auf digitalem Adressieren identifiziert werden, das von der ersten Quelle bis hinauf zur zweiten Quelle ausgeführt wird, so dass die FIs in der Lage sind, eine fehlerhafte Nebenleitung in der linearen Topologie von beiden Seiten ohne unnötiges Abschalten einer oder mehrerer lokaler Lasten zu isolieren.

12. Mikrogitter nach Anspruch 9, wobei die lokalen und/oder Nebenleitungs-FI-Doppelschalter (51, 52) in der Schleifentopologie mit einer Quelle durch die intelligente Steuerung basierend auf digitalem Adressieren aller FIs in der Schleife identifiziert werden, so dass die FIs in der Lage sind, die fehlerhafte Nebenleitung von beiden Seiten der Ankunft in der Schleifentopologie ohne unnötiges Abschalten einer oder mehrerer lokaler Lasten zu isolieren.

13. Mikrogitter nach Anspruch 10, wobei das eindeutige digitale Adressieren per FI-Doppelschalter (51, 52) zwei voreingestellte 2-Zustände-Flags umfasst, die "Last" oder "Keine Last" und "Nebenleitung" oder "Keine Nebenleitung" entsprechen, was es der intelligenten Doppelschaltersteuerung ermöglicht, die fehlerhafte Last oder die letzte fehlerhafte Nebenleitung oder nur die fehlerhafte Nebenleitung im Falle einer Schleifentopologie oder eines Doppelquellenaufbaus zu isolieren.

14. Mikrogitter nach Anspruch 4, wobei die lokalen bidirektionalen DC/DC- oder DC/AC-Wandler (105) zum Umwandeln des HVDC in eine entsprechende DC-Spannungsausgabe, die geeignet ist, lokale Frontend-Lasten (8, 104) mit Energie zu versorgen, außerdem mit lokalen Energiezwischenspeichern versehen sind, wie beispielsweise kapazitiven Zwischenspeichern, so dass eine lokale Energiespeicherung ermöglicht wird, die zum Auffangen von Energieverbrauchsspitzen geeignet ist, so dass eine Schwankung der Linienspannung verringert wird.

15. Mikrogitter nach Anspruch 1, wobei das Mikrogitter ein Energiekabel verwendet, das 2N Litzendrähte enthält, die es ermöglichen, das Verteilungsnetz- und Lastensystem (3) in zwei Teilnetze A, B zu teilen, die aus A1, ..., An, ..., AN beziehungsweise B1, ..., Bn, ..., BN Nebenleitungen bestehen, wobei jede einzelne lokale Last mit einer oder beiden Nebenleitungen des gleichen Ranges 1, ..., n, ..., N verbunden ist, jede duale Nebenleitungseinheit mit zwei entsprechenden Nebenleitungsfehlerisolatoren STFI und anweisbaren Überbrückungsmitteln zwischen beiden Nebenleitungen versehen ist und jede einzelne lokale Last mit einem lokalen Lastfehlerisolator LLFI versehen ist, so dass im Fall des Auftretens eines Fehlers in dem Netzwerk eine fehlerhafte Nebenleitung An beziehungsweise Bn (1 ≤ n ≤ N) isoliert und dank der STFIs umgangen und durch die intakten Nebenleitungen Bn beziehungsweise An ersetzt werden, um verbleibende Abschnitte des Netzes mit Energie zu versorgen.

16. Mikrogitter nach Anspruch 15, wobei im Fall des Umgehens einer fehlerhaften Nebenleitung eine Steuerung bereitgestellt ist, um sicherzustellen, dass die intakte Nebenleitung zu höchstens 70 % der zulässigen Stromlast des Litzenkabels führt und/oder um ein verringertes Belasten von Lasten niedrigerer Priorität sicherzustellen.

## Revendications

1. Micro-réseau présentant une source de courant continu à haute tension (CCHT) pour distribuer efficacement et en toute sécurité du courant électrique à des charges décentralisées, comprenant :
- au moins un bloc principal d'alimentation en courant CCHT (2) pouvant être connecté en entrée à un réseau en courant alternatif (1) et en sortie à un système de charges et réseau de distribution principal de courant continu (3), présentant un moyen de réserve de courant et comprenant un localisateur de défauts principal sous forme de commutateur, ou localisateur de défauts principal (22) ;
- le système de charges et réseau de distribution de courant principal (3) comprenant une ligne de câble principal (10) et des ligne de câbles secondaires (9) et/ou des cellules de charges locales de première ligne (8) connectées en parallèle à la ligne de câble principal (10) et comprenant à chaque dérivation d'une ligne de câbles secondaires et d'une charge, ou d'une ligne de câbles secondaires de rang « **n-1** » et d'une ligne de câbles secondaires de rang « **n** », un localisateur de défauts local sous forme de commutateur, ou localisateur de défauts local (24), « **n** » étant un nombre entier compris dans la plage [1,N] ;
- un contrôleur principal intelligent comprenant des microcontrôleurs (11A,11B), apte à faire fonctionner en cascade et intelligemment des localisateurs de défauts locaux voisins (24), en cas d'occurrence de défaut dans le micro-réseau, de manière à isoler le défaut et à favoriser ou augmenter la résilience du micro-réseau ;
**caractérisé en ce que** ledit fonctionnement intelligent et en cascade des localisateurs de défauts locaux voisins (24) comprend l'affectation de temps croissants d'ouverture de commutateur au niveau des localisateurs de défauts locaux (24) dans le système de charges et réseau de distribution principal de courant continu (3), lesdits temps d'ouverture au niveau des localisateurs de défauts locaux respectifs (24) présentant une origine temporelle commune définie comme le temps d'occurrence de défaut et augmentant avec la distance électrique ou de longueur de câble croissante desdits localisateurs de défauts locaux (24) s'éloignant à partir d'un emplacement de ligne de câbles secondaires défectueux dans la direction orientée vers l'emplacement du localisateur de défaut principal, de manière à déconnecter successivement du réseau, dans la direction vers l'emplacement du localisateur de défaut principal, la ou les ligne(s) de câbles secondaires défectueuse(s), jusqu'à une première ligne de câbles secondaires non défectueuse, tandis qu'au moins une charge locale défectueuse possible a déjà été isolée durant le laps de temps correspondant au temps d'ouverture du localisateur de défaut local (24) de la dernière ligne de câbles secondaires défectueuse déconnectée.

2. Micro-réseau selon la revendication 1, **caractérisé en ce que** ledit contrôleur principal intelligent est également apte à identifier l'occurrence d'un défaut de sécurité, du type fuite de courant à la terre, et un pic de demande de puissance locale dans des charges locales (8) dans au moins une partie du système de charges et réseau de distribution (3), et en outre à isoler localement ledit défaut, ainsi qu'à commander au bloc d'alimentation central principal (2) de partager au moins une partie de sa réserve d'énergie avec lesdites charges locales (8), dans au moins une partie du système de charges et réseau de distribution (3), par l'intermédiaire de la ligne de câble principal (10) et des lignes de câbles secondaires (9), tout en maintenant la tension stable dans l'ensemble du système de charges et réseau de distribution (3).

3. Micro-réseau selon la revendication 1, dans lequel la ligne de câble principal (10) est composée de lignes de câbles secondaires (9) en ligne et séparées par des localisateurs de défauts locaux (24).

4. Micro-réseau selon la revendication 1, **caractérisé en ce qu'**il comprend des convertisseurs bidirectionnels continu-continu CC/CC ou continu-alternatif CC/CA locaux (105) pour convertir la tension CCHT en une tension CC de sortie stable, adaptée à alimenter des charges locales de première ligne (8,104).

5. Micro-réseau selon la revendication 1, **caractérisé en ce que** l'alimentation principale en courant CCHT (2) comprend un convertisseur bidirectionnel CA/CC ou un convertisseur bidirectionnel UPS du type CA/CC/CC (21A, 21B ; 101,102), doté d'un stockage d'énergie (23 ; 103) ou un convertisseur CA/CA/CC entièrement bidirectionnel avec stockage d'énergie, tel que la technologie ECI.

6. Micro-réseau selon la revendication 1, **caractérisé en ce que** le localisateur de défauts principal (22) comprend un contrôleur de mise à la terre du point neutre à haute résistance (4) et un commutateur principal (5) présentant un temps d'ouverture « T1 », de préférence égal ou supérieur à 100 ms, en série avec la ligne de câbles principale (10) et commandé par un microcontrôleur principal (11A).

7. Micro-réseau selon la revendication 1, **caractérisé en ce que** ledit localisateur de défauts local (24) comprend un premier commutateur de localisateur de défauts (51) situé entre la ligne de câble principale (10) et la ligne de câbles secondaires / charge locale (9,8), un second commutateur de localisateur de défauts (52) étant situé en série avec la ligne de câble principale (10), ou étant situé entre une première ligne de câbles secondaires (9) et une ligne de câbles secondaires / charge locale (9,8), un second commutateur de localisateur de défauts (52) étant situé en série avec la première ligne de câbles secondaires (9), et ainsi de suite.

8. Micro-réseau selon la revendication 7, **caractérisé en ce que** le temps d'ouverture « T3 » de tous les premiers commutateurs de localisateur de défaut (51) est inférieur à 10 ms, de préférence 2 ms, et le temps d'ouverture « T2 » de tous les seconds commutateurs de localisateur de défauts (52) est tel que T2 > T3, « T2 » étant de préférence égal à au moins 10 ms, chaque paire de premiers et seconds commutateurs de localisateur de défauts (51, 52) étant commandée par un microcontrôleur local (11B), de façon à satisfaire la condition T1 > (T2 + nT1/N) > T3, où « n », un nombre entier, est une adresse de commutateur variant entre 0 et N-1, « N » étant le nombre total de localisateurs de défauts locaux (24) comprenant un premier commutateur de localisateur de défauts (51) et un second commutateur de localisateur de défauts (52).

9. Micro-réseau selon la revendication 1, **caractérisé en ce que** le système de charges et réseau de distribution de courant CC (3) présente une topologie linéaire avec des charges réparties linéairement et une ou deux sources, dans ce dernier cas une source étant située à chaque extrémité de la ligne de câble principale (10), ou réalise une boucle avec au moins une source, ou est conçu selon une arborescence avec une seule source ou selon une arborescence avec plusieurs sous-boucles.

10. Micro-réseau selon la revendication 9, **caractérisé en ce que**, dans l'arborescence, les doubles commutateurs de localisateurs de défauts (51,52) des lignes de câbles secondaires et/ou locaux sont identifiés par le contrôleur principal intelligent par le biais d'adresses numériques uniques avec un drapeau de charge locale et/ou un drapeau de ligne de câbles secondaires connexes.

11. Micro-réseau selon la revendication 9, **caractérisé en ce que**, dans la topologie linéaire avec une source à chaque extrémité du ligne de câble principale (10), les doubles commutateurs de localisateurs de défauts (51,52) des lignes de câbles secondaires et/ou locaux sont identifiés par le contrôleur principal intelligent, sur la base d'une identification numérique mise en œuvre depuis la première source jusqu'à la seconde source, de sorte que les localisateurs de défauts peuvent isoler une sous-liaison de câbles secondaires défectueuse à partir des deux côtés dans la topologie linéaire, sans mise hors tension injustifiée d'une ou plusieurs charges locales.

12. Micro-réseau selon la revendication 9, **caractérisé en ce que**, dans la topologie en boucle avec une seule source, les doubles commutateurs des localisateurs de défauts (51,52) des lignes de câbles secondaires et/ou locaux sont identifiés par le contrôleur intelligent, sur la base d'une identification numérique de tous les localisateurs de défauts dans la boucle, de sorte que les localisateurs de défauts peuvent isoler la ligne de câbles secondaires défectueuse à partir des deux côtés d'arrivée dans la topologie en boucle, sans mise hors tension injustifiée d'une ou plusieurs charges locales.

13. Micro-réseau selon la revendication 10, **caractérisé en ce que** l'identification numérique unique par double commutateur de localisateur de défauts (51,52) comprend deux drapeaux préréglés à deux états, correspondant aux états « charge » ou « sans charge » et « câbles secondaires » ou « sans câbles secondaires», permettant au contrôleur intelligent à double commutateur d'isoler la charge défectueuse, ou la dernière ligne de câbles secondaires défectueuse, ou seulement la ligne de câbles secondaires défectueuse dans le cas d'une topologie en boucle ou d'une configuration à double source.

14. Micro-réseau selon la revendication 4, **caractérisé en ce que** les convertisseurs bidirectionnels locaux CC/CC ou CC/CA (105) destinés à convertir un courant CCHT en une tension de sortie CC respective adaptée à alimenter des charges locales de première ligne (8,104) sont également dotés de réserves d'énergie locales, tels que des réserves capacitives, de façon à permettre un stockage local d'énergie adapté à absorber des pics de consommation d'énergie et à réduire la variation de tension de ligne.

15. Micro-réseau selon la revendication 1, **caractérisé en ce que** le micro-réseau utilise un câble d'alimentation contenant « 2N » fils d'alimentation toronnés, permettant de subdiviser le système de charges et réseau de distribution (3) en deux sous-réseaux A, B, constitués chacun des lignes de câbles secondaires A1, ..., An, ..., AN et B1, ..., Bn, ..., BN, respectivement, chaque charge locale unique étant connectée à l'une ou aux deux lignes de câbles secondaires du même rang 1, ..., n, ..., N, chaque double ligne de câbles secondaires étant dotée de deux localisateurs de défauts de ligne de câbles secondaires correspondants, et d'un moyen de pontage qui peut être commandé entre les deux lignes de câbles secondaires, et chaque charge locale unique étant dotée d'un localisateur de défaut de charge locale de sorte que, en cas d'occurrence d'un défaut dans le réseau, une ligne de câbles secondaires défectueuse An, Bn, respectivement (1 ≤ n ≤ N), peut être isolée et contournée grâce aux localisateurs de défauts de charge locale et remplacée par la ligne de câbles secondaires saine Bn, An, respectivement, pour alimenter les sections restantes du réseau.

16. Micro-réseau selon la revendication 15, **caractérisé en ce que**, en cas de contournement d'une ligne de câbles secondaires défectueuse, une commande est fournie afin de garantir que la ligne de câbles secondaires saine transporte tout au plus 70 % du courant de câble toronné nominal maximal et/ou afin de garantir dynamiquement une réduction de charge des charges de priorité inférieure.
